# EUROPÄISCHE PATENTANMELDUNG

(11) **EP 4 537 966 A1**
(43) Veröffentlichungstag der Anmeldung: **16.04.2025**
(21) Anmeldenummer: 23203628.5
(22) Anmeldetag: 13.10.2023
(51) Int. Cl.: B23F 5/04, B23F 21/00, B23F 23/12, G05B 19/18, G05B 19/406, B23F 21/02

(54) **VERFAHREN ZUM EINRICHTEN EINES VERZAHNUNGSSCHLEIFVERFAHRENS UND VERZAHNUNGSSCHLEIFVERFAHREN**

(71) Anmelder: Klingelnberg AG, 8050 Zürich (CH)
(72) Erfinder: Kienzle, Florian, 71696 Möglingen (DE); Vogel, Olaf, 76275 Ettlingen (DE)
(74) Vertreter: Janke Scholl Patentanwälte PartG mbB

(57) **Zusammenfassung**

Verfahren zum Einrichten eines Verzahnungsschleifverfahrens, mit den Verfahrensschritten: Bestimmen von Achsbewegungen und/oder einer Geometrie eines Schleifwerk-zeugs (17) für einen Schleifhub oder für mehrere Schleifhübe mittels eines ersten Qualitätsregelkreises (Q1) durch Wiederholen der Schritte Schleifen (18), Messen (20) und Korrigieren (28) für eine vor-finale Sollgeometrie (12) einer Verzahnung (4), die ein Aufmaß (14) zu einer finalen Sollgeometrie (8) der Verzahnung (4) auf-weist, wobei die Schritte Schleifen (18), Messen (20) und Korrigieren (28) des ersten Qualitätsregelkreises (Q1) an einem Bauteil oder an mehreren Bauteilen (19) solange wiederholt werden, bis eine an dem jeweiligen Bauteil (19) oder den jeweiligen Bauteilen (19) geschliffene Verzahnung eine vorgegebene Genauigkeit gegenüber der vor-finalen Sollgeometrie (12) erreicht hat; Bestimmen von Achsbewegungen und/oder einer Geometrie eines Schleifwerk-zeugs (17) für einen Schleifhub oder für mehrere Schleifhübe mittels eines zweiten Qualitätsregelkreises (Q2) durch Wiederholen der Schritte Schleifen (18), Messen (20) und Korrigieren (28) für die finale Sollgeometrie (12) der Verzahnung (4), wobei die Schritte Schleifen (18), Messen (20) und Korrigieren (28) des zweiten Qualitätsregelkreises (Q2) an einem Bauteil (19) oder an mehreren Bauteilen (19) so-lange wiederholt werden, bis eine an dem jeweiligen Bauteil (19) oder den jeweiligen Bauteilen (19) geschliffene Verzahnung eine vorgegebene Genauigkeit gegenüber der finalen Sollgeometrie (8) erreicht hat.

## Beschreibung

Die vorliegende Erfindung betrifft ein Verfahren zum Einrichten eines Verzahnungsschleifverfahrens sowie ein Verzahnungsschleifverfahren.

Die Bearbeitung von zu schleifenden Verzahnungen umfasst üblicherweise mehrere Schleifhübe. Dabei kommen beispielsweise einer oder mehrere sogenannte Schrupphübe zum Einsatz, die zunächst mit einer größeren Zustellung erfolgen, gefolgt von mindestens einem sogenannten Schlichthub, der mit einer kleineren Zustellung durchgeführt wird.

Das gröbere Schruppen dient dazu, zunächst zügig Material mit größerem Zeitspanvolumen bis auf ein vorgegebenes Aufmaß zu entfernen, während das finale Schlichten der möglichst präzisen Abbildung der vorgegebenen Sollgeometrie der Verzahnung an der zu schleifenden Verzahnung mit geringerem Zeitspanvolumen dient. Um kurze Bearbeitungszeiten zu erreichen, wird angestrebt, die Anzahl der Schleifhübe insgesamt möglichst gering zu halten.

Zwischen den Schleifhüben wird häufig von einer Gleichlaufbearbeitung zu einer Gegenlaufbearbeitung gewechselt, um die Zeit zum Umpositionieren des Werkzeugs zwischen den Schleifhüben klein zu halten. Der Wechsel zwischen Gleichlauf und Gegenlauf ist gleichbedeutend mit einem Wechsel der geometrischen Hubrichtung. Der finale Schlichthub oder auch alle Schlichthübe werden dabei oft im Gegenlauf ausgeführt, um eine gute Oberfläche an den Zahnflanken zu erzeugen. Neben der Zustellung und der Bearbeitungsrichtung variieren häufig auch technologische Größen, wie die Vorschübe und Schnittgeschwindigkeiten, d.h. die jeweilige Drehzahl des Schleifwerkzeugs, von Schleifhub zu Schleifhub.

Untersuchungen der Anmelderin haben gezeigt, dass die Eingriffsverhältnisse während der Bearbeitung von Schleifhub zu Schleifhub unterschiedlich sind. Abhängig vom jeweiligen Schleifhub wirken unterschiedliche Abdrängkräfte und Anregungen auf das Schleifwerkzeug, die das Schleifergebnis und damit die Form der jeweils durch den Schleifhub erzeugten Zahnflanke beeinflussen. So können die Schrupphübe und diejenigen Schlichthübe, die ggf. vor einem finalen Schlichthub erfolgen, einen Einfluss auf die von dem finalen Schlichthub erzeugte, finale Flankenform der Verzahnung haben.

Weitere Untersuchungen der Anmelderin haben gezeigt, dass derjenige Schleifhub, der unmittelbar vor dem finalen Schleifhub durchgeführt wird, hier auch als vor-finaler Schleifhub bezeichnet, ein für den finalen Schleifhub erforderliches Aufmaß ggf. nicht gleichmäßig genug erzeugt - beispielsweise aufgrund eines Wechsels der Hubrichtung vor dem finalen Schleifhub. Die Ungenauigkeiten aus dem vor-finalen Schleifhub können in dem anschließenden, finalen Schleifhub ggf. nicht vollständig ausgeglichen werden.

Mit anderen Worten können sich Abweichungen aus vor-finalen Schrupp- oder Schlichthüben bis in die final erzeugte Istgeometrie der Verzahnung übertragen. So können z.B. auch Abdrängungen des Schleifwerkzeugs beim Ein- und Auslauf während eines vor-finalen Schleifhubs dazu führen, dass die aus den Abdrängungen resultierenden Abweichungen in der finalen Flankenform messbar sind.

Abweichungen von der gewünschten Verzahnungsgeometrie bzw. Flankenform werden meist in einem Qualitätsregelkreis korrigiert, der auch als "Closed Loop" bezeichnet wird. Hierbei wird die final gefertigte Verzahnungsgeometrie gemessen und ermittelte Abweichungen zur zu fertigenden Sollgeometrie durch Anpassung von Achsbewegungen für das Schleifen der Verzahnung und/oder für das Abrichten des Schleifwerkzeugs vorgehalten. Diese Anpassungen der Achsbewegungen heißen auch Korrekturen. Der Closed Loop ist daher ein Qualitätsregelkreis mit den sich wiederholenden Schritten "Schleifen", "Messen" und "Korrigieren".

Die Korrekturen erfolgen hierbei für alle Schleifhübe in gleicher Weise. Dieser Umstand liegt darin begründet, dass die Korrekturen auf der Grundlage der finalen Abweichungen, d.h. derjenigen Abweichungen der Istgeometrie von der zu fertigenden, finalen Sollgeometrie der Verzahnung, die nach dem finalen Schleifhub vorliegen, bestimmt werden. Die korrigierten Achsbewegungen der vor-finalen Schleifhübe werden somit aus den Korrekturen des finalen Schleifhubs abgeleitet. Dieses Vorgehen hat den Nachteil, dass bestimmte negative Einflüsse vor-finaler Schleifhübe auf die finale Flankenform ggf. zwar gemindert, aber nicht entfernt werden können.

Vor diesem Hintergrund liegt der vorliegenden Erfindung die technische Problemstellung zugrunde, ein verbessertes Verfahren zum Einrichten eines Verzahnungsschleifverfahrens sowie ein Verzahnungsschleifverfahren anzugeben, die insbesondere höhere Genauigkeiten für die finale Flankenform und weiter insbesondere eine präzisere Korrektur ermöglichen.

Gemäß einem ersten Aspekt betrifft die Erfindung ein Verfahren zum Einrichten eines Verzahnungsschleifverfahrens, mit den Verfahrensschritten: Bestimmen von Achsbewegungen und/oder einer Geometrie eines Schleifwerkzeugs für einen Schleifhub oder für mehrere Schleifhübe mittels eines ersten Qualitätsregelkreises durch Wiederholen der Schritte Schleifen, Messen und Korrigieren für eine vor-finale Sollgeometrie einer Verzahnung, die ein Aufmaß zu einer finalen Sollgeometrie der Verzahnung aufweist, wobei die Schritte Schleifen, Messen und Korrigieren des ersten Qualitätsregelkreises an einem Bauteil oder an mehreren Bauteilen solange wiederholt werden, bis eine an dem jeweiligen Bauteil oder den jeweiligen Bauteilen geschliffene Verzahnung eine vorgegebene Genauigkeit gegenüber der vor-finalen Sollgeometrie erreicht hat; Bestimmen von Achsbewegungen und/oder einer Geometrie eines Schleifwerkzeugs für einen Schleifhub oder für mehrere Schleifhübe mittels eines zweiten Qualitätsregelkreises durch Wiederholen der Schritte Schleifen, Messen und Korrigieren für die finale Sollgeometrie der Verzahnung, wobei die Schritte Schleifen, Messen und Korrigieren des zweiten Qualitätsregelkreises an einem Bauteil oder an mehreren Bauteilen solange wiederholt werden, bis eine an dem jeweiligen Bauteil oder den jeweiligen Bauteilen geschliffene Verzahnung eine vorgegebene Genauigkeit gegenüber der finalen Sollgeometrie erreicht hat.

Die erfindungsgemäßen Qualitätsregelkreise ermöglichen eine präzisere Einrichtung des Schleifverfahrens, in dem bereits eine vor-finale Sollgeometrie der Verzahnung mittels eines eigenen Closed Loop korrigiert wird - und zwar dem ersten Qualitätsregelkreis. So kann vermieden werden, dass sich z.B. Abweichungen aus Schrupphüben bis in die finale Flankenform übertragen, da diese mit einem konventionellen, einzelnen Closed Loop, der eingangs beschrieben worden ist, ggf. nicht vollständig korrigiert werden können.

Mit anderen Worten wird erfindungsgemäß bereits mindestens eine Vorstufe zur finalen Sollgeometrie mittels eines eigenen Qualiätsregelkreises eingerichtet und korrigiert, um das finale Bearbeitungsergebnisse zu verbessern. So kann insbesondere erreicht werden, dass ein für den finalen Schleifhub erforderliches Aufmaß mit höherer Genauigkeit erreicht werden kann, als es ein konventioneller, einzelner Qualiätsregelkreis ermöglichen würde. In dem bereits einer oder mehrere vor-finale Schleifhübe mittels des ersten Qualiätsregelkreises verbessert werden, wird dem zweiten Qualiätsregelkreis, der auch den finalen Schleifhub umfasst, bereits ein verbessertes "Zwischenprodukt" in Form einer Verzahnung mit genauerem Aufmaß übergeben.

Erfindungsgemäß kann daher auch von einem mehrstufigen, insbesondere zweistufigen, bzw. kaskadierten Closed Loop zum Einrichten eines Schleifprozesses gesprochen werden, der einzelne Schleifhübe oder Gruppen von Schleifhüben mittels zugeordneter Qualitätsregelkreise separat korrigiert und einrichtet.

Es kann vorgesehen sein, dass der erste Qualitätsregelkreis ein Schruppen betrifft und der zweite Qualitätsregelkreis ein Schlichten der Verzahnung. Ein jeweiliger Schleifhub des ersten Qualitätsregelkreises kann insbesondere ein größeres Zeitspanvolumen aufweisen als ein jeweiliger Schleifhub des zweiten Qualitätsregelkreises.

Wenn vorliegend von einem Aufmaß der vor-finalen Sollgeometrie gegenüber einer finalen Sollgeometrie gesprochen wird, so muss dieses Aufmaß nicht über die gesamte Flanke betrachtet konstant sein. Beispielsweise kann vorgesehen, dass in einer Mitte der Zahnflanke ein größeres Aufmaß der vor-finalen Sollgeometrie gegenüber der finalen Sollgeometrie vorgesehen ist als in Randbereichen der Zahnflanke, oder umgekehrt. Das Aufmaß kann jedoch für die gesamte Zahnflanke konstant sein. Bevorzugt weist die gesamte Zahnflanke der vor-finalen Sollgeometrie ein Aufmaß gegenüber der finalen Sollgeometrie auf. Es kann jedoch auch vorgesehen sein, dass ein einzelner Bereich, einzelne Bereiche oder einzelne Punkte der vor-finalen Sollgeometrie kein Aufmaß zur finalen Sollgeometrie aufweisen.

Es kann vorgesehen sein, dass die mittels des ersten Qualitätsregelkreises bestimmten Achsbewegungen aus unkorrigierten Achsbewegungen bestimmt werden, indem den unkorrigierten Achsbewegungen Korrekturen zugeordnet werden, wobei die Korrekturen in dem Schritt Korrigieren des ersten Qualitätsregelkreises anhand von in dem Schritt Messen des ersten Qualitätsregelkreises ermittelten Abweichungen mindestens einer geschliffenen Verzahnung von der vor-finalen Sollgeometrie berechnet werden.

Unkorrigierte Achsbewegungen sind dabei diejenigen Achsbewegungen, die zunächst von einer Software zur Zahnrad- und Prozessauslegung bereitgestellt werden. Sie können auch als Produktionsdaten bezeichnet werden, die der Schleifmaschine zum Verzahnungsschleifen von der Software zur Zahnrad- und Prozessauslegung übergeben werden. Eine solche Software wird z.B. durch die Anmelderin unter dem Namen "Gear Designer" vertrieben.

Die unkorrigierten Produktionsdaten bzw. unkorrigierten Achsbewegungen werden von der Software für den idealen Schleifprozess bestimmt. D.h. es wird in der Software von einer abweichungsfrei arbeitenden Schleifmaschine und einem abweichungsfreien Werkzeug ausgegangen. Es versteht sich, dass sowohl die Antriebe, Lagerungen und Strukturen einer Schleifmaschine als auch das Werkzeug Toleranzen unterliegen, so dass das Betreiben der Schleifmaschine mit den unkorrigierten Produktionsdaten zwangsläufig zu Abweichungen der gefertigten Istgeometrie von der vor-finalen Sollgeometrie führt.

Der erste Qualitätsregelkreis passt demnach die zunächst unkorrigiert an die Schleifmaschine übergebenen Achsbewegungen schrittweise an die betreffende Schleifmaschine an, um durch Korrekturen der Achsbewegungen die vor-finale Sollgeometrie der Verzahnung möglichst genau an der zu schleifenden Verzahnung zu erzeugen.

Je nach Art und Ausprägung der zu korrigerenden Abweichungen können Korrekturen für die Achsbewegungen und/oder für die Geometrie des Schleifwerkzeugs verwendet werden, um die gemessenen Abweichungen der gefertigten Istgeometrie von der vor-finalen Sollgeometrie mittels des ersten Qualitätsregelkreises zu reduzieren.

Es kann vorgesehen sein, dass die mittels des ersten Qualitätsregelkreises bestimmte Geometrie des Schleifwerkzeugs aus einer unkorrigierten Geometrie des Schleifwerkzeugs bestimmt wird, indem der unkorrigierten Geometrie des Schleifwerkzeugs Korrekturen zugeordnet werden, wobei die Korrekturen in dem Schritt Korrigieren des ersten Qualitätsregelkreises anhand von in dem Schritt Messen des ersten Qualitätsregelkreises ermittelten Abweichungen mindestens einer geschliffenen Verzahnung von der vor-finalen Sollgeometrie berechnet werden.

Auch hier gilt, dass der erste Qualitätsregelkreis die zunächst unkorrigiert für den theoretisch perfekten Prozess bestimmten Produktionsdaten, und zwar vorliegend die Geometrie des Schleifwerkzeugs, für den realen Prozess mittels Korrekturen anpasst, um eine möglichst geringe Abweichung der geschliffenen Verzahnung von der vor-finalen Sollgeometrie zu erreichen. Sofern Korrekturen für die Geometrie des Schleifwerkzeugs vorgegeben werden, werde diese Korrekturen durch eine entsprechende Anpassung eines Abrichtprozesses berücksichtigt.

Die voranstehend beschriebene Anpassung von zunächst unkorrigiert bereitgestellten Produktionsdaten durch Korrekturen kann gleichermaßen für den zweiten Qualitätsregelkreis durchgeführt werden, jedoch mit Bezug zur finalen Sollgeometrie.

Gemäß einer Ausgestaltung des Verfahrens kann vorgesehen sein, dass die mittels des zweiten Qualitätsregelkreises bestimmten Achsbewegungen aus unkorrigierten Achsbewegungen bestimmt werden, indem den unkorrigierten Achsbewegungen Korrekturen zugeordnet werden, wobei die Korrekturen in dem Schritt Korrigieren des zweiten Qualitätsregelkreises anhand von in dem Schritt Messen des zweiten Qualitätsregelkreises ermittelten Abweichungen mindestens einer geschliffenen Verzahnung von der finalen Sollgeometrie berechnet werden.

Alternativ oder ergänzend kann vorgesehen sein, dass die mittels des zweiten Qualitätsregelkreises bestimmte Geometrie des Schleifwerkzeugs aus einer unkorrigierten Geometrie des Schleifwerkzeugs bestimmt wird, indem der unkorrigierten Geometrie des Schleifwerkzeugs Korrekturen zugeordnet werden, wobei die Korrekturen in dem Schritt Korrigieren des zweiten Qualitätsregelkreises anhand von in dem Schritt Messen des zweiten Qualitätsregelkreises ermittelten Abweichungen mindestens einer geschliffenen Verzahnung von der finalen Sollgeometrie berechnet werden.

Sofern die zunächst softwarebasiert ermittelten, unkorrigierten Produktionsdaten, d.h. die unkorrigierten Achsbewegungen und/oder die unkorrigierte Geometrie des Schleifwerkzeugs, durch Korrekturen des ersten Qualitätsregelkreises anpasst worden sind, können diese korrigierten Produktionsdaten als Startwerte für den zweiten Qualitätsregelkreis verwendet werden. D.h., dass den Korrekturen des ersten Qualitätsregelkreises mittels des zweiten Qualitätsregelkreis weitere Korrekturen überlagert werden können. Mit anderen Worten kann der zweite Qualitätsregelkreis in diesem Fall als eine Feinabstimmung oder als Anpassung der Korrekturen des ersten Qualitätsregelkreises angesehen werden.

Es kann daher vorgesehen sein, dass die Achsbewegungen und/oder die Geometrie des Schleifwerkzeugs, die mittels des ersten Qualitätsregelkreises bestimmt worden sind, als Eingangsgrößen für den zweiten Qualitätsregelkreis verwendet werden, so dass ein erstes Schleifen des zweiten Qualitätsregelkreises zunächst mit den Achsbewegungen und/oder der Geometrie des Schleifwerkzeugs, die mittels des erstes Qualitätsregelkreises bestimmt worden sind, durchgeführt wird und diese Achsbewegungen und/oder diese Geometrie des Schleifwerkzeugs durch Wiederholen der Schritte Schleifen, Messen und Korrigieren des zweiten Qualitätsregelkreises für die finale Sollgeometrie der Verzahnung angepasst werden, um die Achsbewegungen und/oder die Geometrie des Schleifwerkzeugs des zweiten Qualitätsregelkreises zu bestimmen.

Weiter kann vorgesehen sein, dass die mittels des zweiten Qualitätsregelkreises bestimmten Achsbewegungen aus den Achsbewegungen des ersten Qualitätsregelkreises bestimmt werden, indem den Achsbewegungen oder Korrekturen des ersten Qualitätsregelkreises weitere Korrekturen zugeordnet werden, wobei die weiteren Korrekturen in dem Schritt Korrigieren des zweiten Qualitätsregelkreises anhand von in dem Schritt Messen des zweiten Qualitätsregelkreises ermittelten Abweichungen mindestens einer geschliffenen Verzahnung von der finalen Sollgeometrie berechnet werden.

Alternativ oder ergänzend kann vorgesehen sein, dass die mittels des zweiten Qualitätsregelkreises bestimmte Geometrie des Schleifwerkzeugs aus der Geometrie des Schleifwerkzeugs des ersten Qualitätsregelkreises bestimmt wird, indem der Geometrie des Schleifwerkzeugs oder Korrekturen des ersten Qualitätsregelkreises weitere Korrekturen zugeordnet werden, wobei die weiteren Korrekturen in dem Schritt Korrigieren des zweiten Qualitätsregelkreises anhand von in dem Schritt Messen des zweiten Qualitätsregelkreises ermittelten Abweichungen mindestens einer geschliffenen Verzahnung von der finalen Sollgeometrie berechnet werden.

Die Anzahl der erforderlichen Qualitätsregelkreise kann einzelfallabhängig für einen jeweiligen Schleifprozess festgelegt werden. So kann für einen Schleifprozess die Definition mehrerer vor-finaler Sollgeometrien mit einem jeweils einer jeweiligen vor-finalen Sollgeometrie zugeordneten Qualitätsregelkreis erforderlich sein, um die geforderten Toleranzen der Verzahnung zuverlässig zu erreichen.

Das Verfahren kann weitere Qualitätsregelkreise für weitere Schleifhübe aufweisen.

Jedem Schleifhub kann ein jeweiliger Qualitätsregelkreis zugeordnet sein. D.h. jedem einzelnen Schleifhub kann ein einzelner, nur für diesen jeweiligen Schleifhub vorgesehener Qualitätsregelkreis zugeordnet sein, um den Schleifprozess einzurichten.

Wie bereits diskutiert, können die gemessenen Abweichungen über die Kinematik des Schleifprozesses und/oder über die Geometrie des Schleifwerkzeugs korrigiert werden. Es kann daher vorgesehen sein, dass mindestens ein Qualitätsregelkreis ein Anpassen der Werkzeuggeometrie des Schleifwerkzeugs durch Abrichten aufweist. Die Begriffe "Geometrie des Schleifwerkzeugs" und "Werkzeuggeometrie des Schleifwerkzeugs" werden vorliegend synonym verwendet.

Die unkorrigierten Produktionsdaten können eine unkorrigierte Kinematik für ein Abrichten des Schleifwerkzeugs enthalten. Die Korrekturen können Korrekturen für die Kinematik des Abrichtens des Schleifwerkzeugs enthalten. Es wird daher eine gegenüber der unkorrigierten Kinematik des Abrichtens veränderte Kinematik der Abrichtbewegung verwendet.

Gemäß einem zweiten Aspekt betrifft die Erfindung ein Verfahren, mit den Verfahrensschritten: Schleifen einer Verzahnung, wobei ein Schleifhub oder mehrere Schleifhübe durchgeführt werden, wobei Achsbewegungen und/oder eine Geometrie eines Schleifwerkzeugs verwendet werden, die mittels des ersten Qualitätsregelkreises des erfindungsgemäßen Verfahrens zum Einrichten eines Verzahnungsschleifverfahrens bestimmt worden sind; Weiteres Schleifen der Verzahnung, wobei ein Schleifhub oder mehrere Schleifhübe durchgeführt werden, wobei Achsbewegungen und/oder eine Geometrie des Schleifwerkzeugs verwendet wird, die mittels des zweiten Qualitätsregelkreises des erfindungsgemäßen Verfahrens zum Einrichten eines Verzahnungsschleifverfahrens bestimmt worden sind.

Es kann vorgesehen sein, dass Korrekturen des ersten Qualitätsregelkreises und/oder Korrekturen des zweiten Qualitätsregelkreises angepasst werden, in dem die jeweiligen Schritte Schleifen, Messen und Korrigieren für die geschliffene Verzahnung und/oder weitere geschliffene Verzahnungen durchgeführt werden.

Nachdem der Schleifprozess, d.h. das Verzahnungsschleifverfahren eingerichtet ist, können der erste Qualitätsregelkreis und der zweite Qualitätsregelkreis weiterhin durchgeführt werden, um z.B. innerhalb einer laufenden Serienfertigung die vorgegebenen Qualitäts- bzw. Toleranzanforderungen einzuhalten.

Das Schleifen, d.h. das Verzahnungsschleifen, kann ein kontinuierliches Wälzschleifen mittels einer Schleifschnecke sein, insbesondere mittels einer abrichtbaren Schleifschnecke sein.

Der erste Qualitätsregelkreis und/oder der zweite Qualitätsregelkreis können ein Bestimmen von Achsbewegungen für ein Abrichten der Schleifschnecke aufweisen.

Die Schleifschnecke kann einen ersten Abschnitt aufweisen, der eine Geometrie des Schleifwerkzeugs gemäß dem ersten Qualitätsregelkreis hat, und die Schleifschnecke kann einen zweiten Abschnitt aufweisen, der eine Geometrie des Schleifwerkzeugs gemäß dem zweiten Qualitätsregelkreis hat. Demnach kann ein und dieselbe Schleifschnecke sowohl für die Schleifhübe des ersten Qualitätsregelkreises als auch des zweiten Qualitätsregelkreises verwendet werden. Der jeweils benötigte Abschnitt kann durch Shiften eingestellt werden.

Der erste Abschnitt und der zweite Abschnitt der Schleifschnecke können sich gemäß einer Ausgestaltung lediglich bezüglich ihrer Geometrie entsprechend des ersten und des zweiten Qualitätsregelkreises unterscheiden, jedoch den gleichen Schleifwerkstoff aufweisen, d.h. bezüglich Körnung, Kornmaterial, Porosität und Matrixwerkstoff identisch sein. Die Schleifschnecke kann eine Mehrzahl sich in der Geometrie unterscheidender Abschnitte zum Schruppen und Schlichten aufweisen.

Der erste Abschnitt kann zum Schruppen eingerichtet sein, zum Erreichen eines höheren Zeitspanvolumens eingerichtet sein, während der zweite Abschnitt zum Schlichten eingerichtet sein kann.

Der erste Abschnitt kann zum Schruppen eingerichtet sein, zum Erreichen eines höheren Zeitspanvolumens eingerichtet sein und z.B. eine gröbere Körnung aufweisen, während der zweite Abschnitt zum Schlichten eingerichtet sein kann und z. B. eine feinere Körnung aufweisen kann. Es versteht sich, dass nicht nur die Körnung, sondern auch andere Parameter einer Schleifschnecke, wie z.B. die Porengröße, das Kornmaterial und der Matrixwerkstoff einen Einfluss auf die Abtragsleistung und die Eignung einer Schleifschnecke zum Schruppen oder Schlichten aufweisen.

Nachfolgend wird die Erfindung anhand einer Ausführungsbeispiele darstellenden Zeichnung näher erläutert. Es zeigen jeweils schematisch:
- Fig. 1: einen ersten Qualitätsregelkreis eines erfindungsgemäßen Verfahrens zum Einrichten eines Verzahnungsschleifverfahrens;

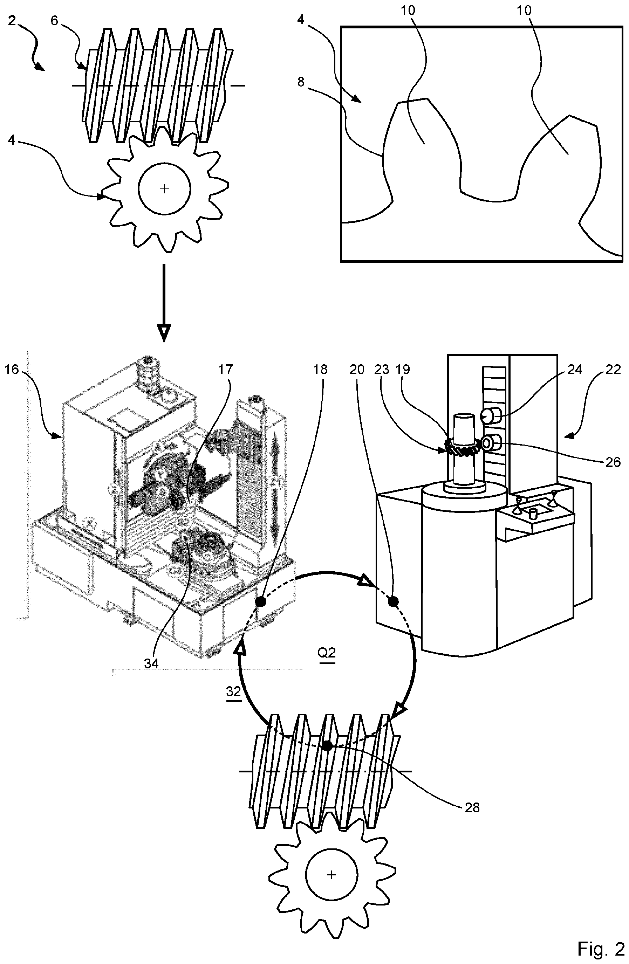

- Fig. 2: einen zweiten Qualitätsregelkreis eines erfindungsgemäßen Verfahrens zum Einrichten eines Verzahnungsschleifverfahrens;
- Fig. 3: eine Schleifschnecke;
- Fig. 4: Bauteile im Eingriff mit der Schleifschecke aus Fig. 3.

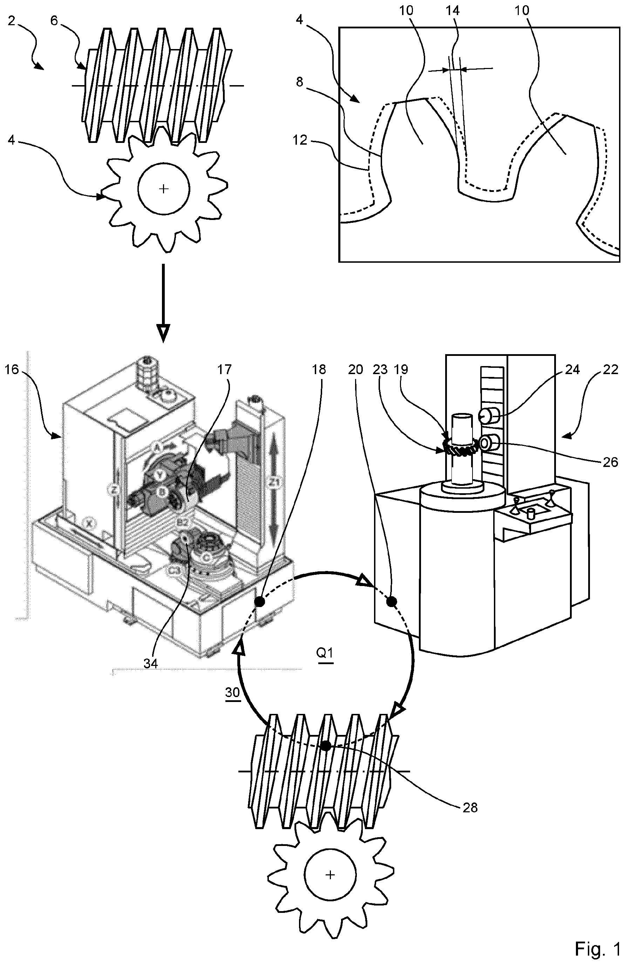

Zunächst erfolgt in einem vorbereitenden Verfahrensschritt 2 die Auslegung einer Verzahnung 4, eines Schleifwerkzeugs 6 zum kontinuierlichen Wälzschleifen der Verzahnung 4 sowie von Achsbewegungen, d. h. einer Prozesskinematik, die zur Herstellung der Verzahnung 4 mittels des Schleifwerkzeugs 6 erforderlich ist. Die Auslegung kann softwarebasiert erfolgen, wie zum Beispiel mit der Software "Gear Designer", die seitens der Anmelderin vertrieben wird (Fig. 1). Die Ergebnisse der Auslegung können insgesamt als Produktionsdaten bezeichnet werden.

Das zuschleifende Bauteil, an dem die Verzahnung 4 hergestellt werden soll, kann beispielsweise ein geradverzahntes Stirnrad oder ein schrägverzahntes Stirnrad sein, das durch Wälzschleifen mittels einer Schleifschnecke gefertigt werden soll.

Die mittels der Software ausgelegte Verzahnung 4 weist eine finale Sollgeometrie 8 auf. Die finale Sollgeometrie 8 ist diejenige Endgeometrie der Verzahnung 4, die letztendlich mittels des erfindungsgemäßen Verzahnungsschleifverfahrens innerhalb eines vorgegebenen Toleranzbereichs gefertigt werden soll.

Die finale Sollgeometrie 8 ist in einer Ausschnittvergrößerung exemplarisch für zwei Zähne 10 der Verzahnung 4 als durchgezogene Linie dargestellt.

Weiter weist die mittels der Software ausgelegte Verzahnung 4 eine vor-finale Sollgeometrie 12 auf, die ein Aufmaß 14 zu der finalen Sollgeometrie 8 hat. Die vor-finale Sollgeometrie 12 ist in der Ausschnittvergrößerung exemplarisch als gestrichelte Linie dargestellt. Die vor-finale Sollgeometrie 12 stellt vorliegend ein Zwischenergebnis des eine Mehrzahl von Schleifhüben aufweisenden Verzahnungsschleifverfahrens dar, das nach einem oder mehreren Schrupphüben und vor dem Ausführen von Schlichthüben erreicht werden soll.

Gemäß alternativer Ausführungsbeispiele kann vorgesehen sein, dass kein Aufmaß im Zahnfuß vorhanden ist und der Zahnfuß nicht mitgeschliffen wird. In diesem Fall kann eine Vorverzahnung ggf. mit Protuberanz bereitgestellt werden, um eine Schleifkerbe im Zahnfuß zu vermeiden.

Die Produktionsdaten der Auslegung gemäß Verfahrensschritt 2 werden nunmehr an eine Schleifmaschine 16 übergeben. Die Produktionsdaten umfassen unkorrigierte Achsbewegungen für die gesteuerten Achsen X, Y, Z, A, B und C der Schleifmaschine 16.

Zudem umfassen die Produktionsdaten eine unkorrigierte Geometrie für das zu verwendende Schleifwerkzeug 17, sodass zunächst eine Verzahnung mittels der unkorrigierten Achsbewegungen und der unkorrigierten Geometrie des Schleifwerkzeugs an einem ersten Bauteil 19 gefertigt wird. Dieses Schleifen einer Verzahnung 23 eines ersten Bauteils 19 bildet den ersten Verfahrensschritt 18 "Schleifen" eines ersten Qualitätsregelkreises Q1 des erfindungsgemäßen Verfahrens zum Einrichten des Verzahnungsschleifverfahrens.

Nachdem die Verzahnung an dem ersten Bauteil 19 geschliffen worden ist, wird dieses Bauteil 19 in einem zweiten Verfahrensschritt 20 "Messen" des ersten Qualitätsregelkreises Q1 übergeben. Hierzu wird die Verzahnung 23 des Bauteils 19 auf einer Koordinatenmessmaschine 22 mittels eines taktilen Messtasters 24 oder einer optischen Messeinrichtung 26 gemessen.

Anhand der Messung werden Abweichungen der Istgeometrie der geschliffenen Verzahnung von der zunächst herzustellenden vor-finalen Sollgeometrie 12 ermittelt und in einem dritten Verfahrensschritt 28 "korrigieren" des ersten Qualitätsregelkreises Q1 Korrekturen 30 für die Achsbewegungen und/oder die Geometrie des Schleifwerkzeugs bestimmt und an die Schleifmaschine 16 übergeben.

Das Korrigieren kann softwarebasiert erfolgen, z.B. mittels der Software "Gear Corrector", die seitens der Anmelderin vertrieben wird.

Soweit beispielsweise aufgrund der gemessenen Abweichungen der gefertigten Istgeometrie von der herzustellenden, vor-finalen Sollgeometrie lediglich eine Korrektur der Achsbewegungen erforderlich ist, wird der erste Qualitätsregelkreis Q1 nunmehr erneut durchgeführt, und zwar beginnend mit dem Verfahrensschritt "Schleifen", der nunmehr mittels der korrigierten Achsbewegungen durchgeführt wird. Gemäß alternativer Ausführungsbeispiele kann vorgesehen sein, dass die Korrekturen ebenfalls eine Korrektur für die Geometrie des Schleifwerkzeugs 17 beinhalten, sofern die gemessenen Abweichungen dies erfordern. In diesem Fall kann das Schleifwerkzeug 17 vor dem erneuten Schleifen entsprechend abgerichtet werden.

Die Verfahrensschritte "Schleifen" 18, "Messen" 20 und "Korrigieren" 28 werden an einem Bauteil oder an mehreren Bauteilen nunmehr solange wiederholt, bis eine an dem jeweiligen Bauteil 19 oder den jeweiligen Bauteilen 19 geschliffene Verzahnung 23 eine vorgegebene Genauigkeit gegenüber der vor-finalen Sollgeometrie erreicht hat bzw. vorgegebene Toleranzen einhält. Sofern diejenigen Korrekturen ermittelt worden sind, für die die vorgegebene Genauigkeit bzw. die geforderten Toleranzen der Verzahnung eingehalten werden, ist der erste Qualitätsregelkreis Q1 des Verfahrens zum Einrichten des Verzahnungsschleifverfahrens abgeschlossen und die Korrekturen für die Schrupphübe sind bekannt.

In einem nächsten Verfahrensschritt wird das voranstehend beschriebene Vorgehen für einen zweiten Qualitätsregelkreis Q2 wiederholt, wobei der zweite Qualitätsregelkreis Q2 dazu dient, Schlichthübe des einzurichtenden Verzahnungsschleifverfahrens unter Berücksichtigung der finalen Sollgeometrie 8 zu optimieren.

Hierzu erfolgt daher wiederum ein Bestimmen von Achsbewegungen und/oder einer Geometrie eines Schleifwerkzeugs für einen Schlichthub oder für mehrere Schlichthübe - und zwar durch Wiederholen der Schritte "Schleifen", "Messen" und "Korrigieren" für die finale Sollgeometrie 8 der Verzahnung 4, wobei die Schritte "Schleifen", "Messen" und "Korrigieren" des zweiten Qualitätsregelkreises Q2 an einem Bauteil oder an mehreren Bauteilen solange wiederholt werden, bis eine an dem jeweiligen Bauteil 19 oder den jeweiligen Bauteilen 19 geschliffene Verzahnung 23 eine vorgegebene Genauigkeit gegenüber der finalen Sollgeometrie erreicht hat.

Im vorliegenden Beispiel dienen die Achsbewegungen und/oder die Geometrie des Schleifwerkzeugs, die mittels des ersten Qualitätsregelkreises Q1 bestimmt worden sind, als Eingangsgrößen für den zweiten Qualitätsregelkreis Q2, sodass ein erstes Schleifen des zweiten Qualitätsregelkreises Q2 zunächst mit den Achsbewegungen und/oder der Geometrie des Schleifwerkzeugs, die mittels des ersten. Qualitätsregelkreises Q1 bestimmt worden sind, durchgeführt wird und diese Achsbewegungen und/oder diese Geometrie des Schleifwerkzeugs durch Wiederholen der Schritte "Schleifen", "Messen" und Korrigieren des zweiten Qualitätsregelkreises für die finale Sollgeometrie der Verzahnung angepasst werden, um die Achsbewegungen und/oder die Geometrie des Schleifwerkzeugs des zweiten Qualitätsregelkreises Q2 zu bestimmen.

Den Korrekturen 30 des ersten Qualitätsregelkreises werden daher mittels des zweiten Qualitätsregelkreises weitere Korrekturen 32 überlagert, um mittels der Schlichthübe die geforderte finale Sollgeometrie 8 der Verzahnung 4 möglichst exakt herstellen zu können.

Um die Geometrie des Schleifwerkzeugs zu korrigieren, kann ein Abrichten des Schleifwerkzeugs 17 mittels der Schleifmaschine 16 erfolgen, wobei die Schleifmaschine 16 einen Abrichter 34 sowie gesteuerte Achsen zum Abrichten aufweist, die korrigierte Achsbewegungen für das Abrichten ausführen, und zwar die Achsen B2 und C3 des Abrichters, sowie die entsprechenden bereits zuvor genannten Achsen der Schleifmaschine 16, die zur Steuerung der Bewegungen des Schleifwerkzeugs 17 vorgesehen sind, und zwar die Achsen X, Y, Z, A, B.

Gemäß alternativer Ausführungsbeispiele kann vorgesehen sein, dass die Qualitätsregelkreise Q1 und Q2 unabhängig voneinander sind, und keine Korrekturen von dem ersten Qualitätsregelkreis Q1 an den zweiten Qualitätsregelkreis Q2 übergeben werden. In diesem Fall starten beide Qualitätsregelkreise Q1 und Q2 mit den unkorrigierten Produktionsdaten der Auslegung und es werden jeweils unabhängig voneinander Korrekturen ermittelt.

Nachdem der erste Qualitätsregelkreis Q1 und der zweite Qualitätsregelkreis abgeschlossen und die Korrekturen 30 für das Schruppen und die Korrekturen 32 für das Schlichten bestimmte worden sind, kann eine Serienfertigung mittels des eingerichteten Verzahnungsschleifverfahrens durchgeführt werden.

Auf der Schleifmaschine 16 dann ein Verfahren durchgeführt, mit den Verfahrensschritten: Schleifen einer Verzahnung, wobei ein Schleifhub oder mehrere Schleifhübe durchgeführt werden, wobei Achsbewegungen und/oder eine Geometrie eines Schleifwerkzeugs verwendet werden, die mittels des ersten Qualitätsregelkreises Q1 bestimmt worden sind; Weiteres Schleifen der Verzahnung, wobei ein Schleifhub oder mehrere Schleifhübe durchgeführt werden, wobei Achsbewegungen und/oder eine Geometrie des Schleifwerkzeugs verwendet wird, die mittels des zweiten Qualitätsregelkreises Q2 bestimmt worden sind. Das Schleifen ist ein kontinuierliches Wälzschleifen mittels der abrichtbaren Schleifschnecke 17.

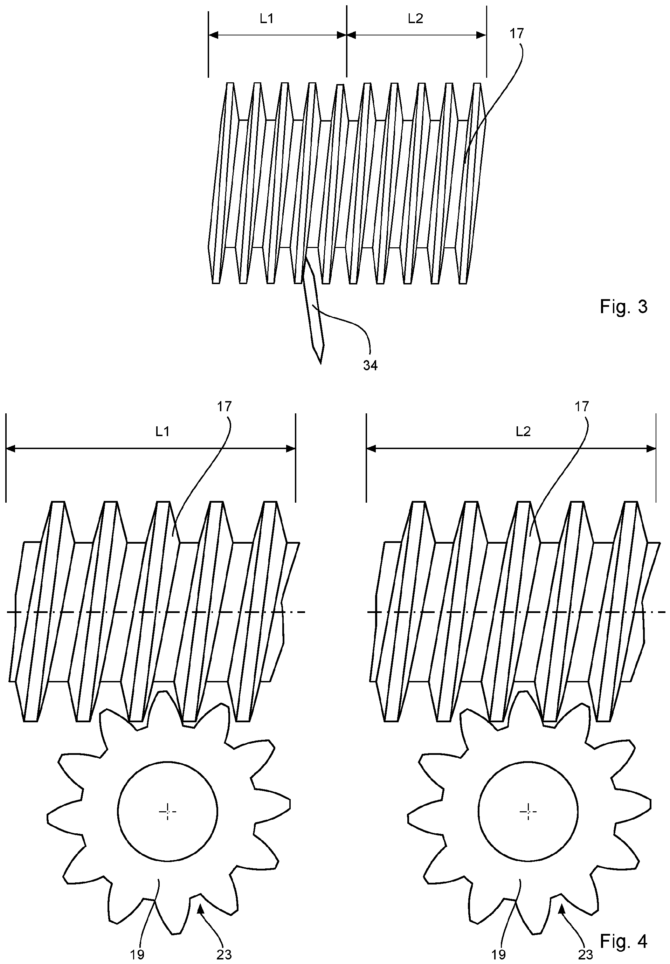

Wie in den Figuren 3 und 4 exemplarisch gezeigt, kann vorgesehen sein, dass die Schleifschnecke 17 einen ersten Abschnitt L1 aufweist, der eine Geometrie des Schleifwerkzeugs gemäß dem ersten Qualitätsregelkreis Q1 hat, und dass die Schleifschnecke 17 einen zweiten Abschnitt L2 aufweist, der eine Geometrie des Schleifwerkzeugs 17 gemäß dem zweiten Qualitätsregelkreis Q1 hat.

Der erste Abschnitt L1 kann zum Schruppen der Verzahnung 23 des Bauteils 19 verwendet werden (Fig. 4). Der zweite Abschnitt L2 kann zum Schlichten der Verzahnung 23 des Bauteils 19 verwendet werden. Die Bezugszeichenliste ist Gegenstand der Offenbarung.

Wenn im vorliegenden Text von Korrekturen gesprochen wird, so können diese beispielsweise geänderte Positionen und/oder geänderte Verfahrwege und/oder geränderte Geschwindigkeiten für die Maschinenachsen X, Y, Z, A, B, C B2, C3 aufweisen. So kann z.B. vorgesehen sein, dass eine Position der X-Achse, die gemäß der unkorrigierten Produktionsdaten während des Schleifens als konstant vorgegeben war, nunmehr während des Schleifens verfahren wird, oder mittels Z und X statt einer Geraden eine Kurve gefahren wird. Gleichermaßen können die Korrekturen für einen oder mehrere Schleifhübe z.B. eine angepasste Zustellung, eine angepasste Schnittgeschwindigkeit, eine angepasste Schleifwerkzeug- oder Werkstückdrehung, eine geänderte Hubgeschwindigkeit oder dergleichen aufweisen. Weiter kann ein Shiftverhältnis geändert werden.

Die Korrekturen können bezüglich der Geometrie des Schleifwerkzeugs z.B. geänderte Werte für einen Eingriffswinkel, die Teilung, einen Steigungswinkel und dergleichen aufweisen, die mittels korrigierter Abrichtbewegungen an dem Schleifwerkzeug erzeugt werden.

### BEZUGSZEICHEN

- 2: softwarebasierte Auslegung der Verzahnung
- 4: Verzahnung gemäß Auslegung
- 6: Schleifschnecke gemäß Auslegung
- 8: finale Sollgeometrie gemäß Auslegung
- 10: Zahn
- 12: vor-finale Sollgeometrie gemäß Auslegung
- 14: Aufmaß
- 16: Schleifmaschine / Verzahnungsschleifmaschine
- 17: Schleifwerkzeug / Schleifschnecke
- 18: Verfahrensschritt "Schleifen"
- 20: Verfahrensschritt "Messen"
- 22: Koordinatenmessmaschine
- 24: taktiler Messtaster
- 26: optisches Messsystem
- 28: Verfahrensschritt "Korrigieren"
- 30: Korrektur
- 32: weitere Korrektur
- 34: Abrichter
- Q1: erster Qualitätsregelkreis
- Q2: zweiter Qualitätsregelkreis
- X: Maschinenachse
- Y: Maschinenachse
- Z: Maschinenachse
- A: Maschinenachse
- B: Maschinenachse
- C: Maschinenachse
- B2: Maschinenachse
- C3: Maschinenachse
- Z1: Spannvorrichtung

## Patentansprüche

1. Verfahren zum Einrichten eines Verzahnungsschleifverfahrens, mit den Verfahrensschritten:
- Bestimmen von Achsbewegungen und/oder einer Geometrie eines Schleifwerkzeugs (17) für einen Schleifhub oder für mehrere Schleifhübe mittels eines ersten Qualitätsregelkreises (Q1) durch Wiederholen der Schritte Schleifen (18), Messen (20) und Korrigieren (28) für eine vor-finale Sollgeometrie (12) einer Verzahnung (4), die ein Aufmaß (14) zu einer finalen Sollgeometrie (8) der Verzahnung (4) aufweist, wobei die Schritte Schleifen (18), Messen (20) und Korrigieren (28) des ersten Qualitätsregelkreises (Q1) an einem Bauteil oder an mehreren Bauteilen (19) solange wiederholt werden, bis eine an dem jeweiligen Bauteil (19) oder den jeweiligen Bauteilen (19) geschliffene Verzahnung eine vorgegebene Genauigkeit gegenüber der vor-finalen Sollgeometrie (12) erreicht hat;
- Bestimmen von Achsbewegungen und/oder einer Geometrie eines Schleifwerkzeugs (17) für einen Schleifhub oder für mehrere Schleifhübe mittels eines zweiten Qualitätsregelkreises (Q2) durch Wiederholen der Schritte Schleifen (18), Messen (20) und Korrigieren (28) für die finale Sollgeometrie (12) der Verzahnung (4), wobei die Schritte Schleifen (18), Messen (20) und Korrigieren (28) des zweiten Qualitätsregelkreises (Q2) an einem Bauteil (19) oder an mehreren Bauteilen (19) solange wiederholt werden, bis eine an dem jeweiligen Bauteil (19) oder den jeweiligen Bauteilen (19) geschliffene Verzahnung eine vorgegebene Genauigkeit gegenüber der finalen Sollgeometrie (8) erreicht hat.

2. Verfahren nach Anspruch 1,
**dadurch gekennzeichnet, dass**
- die mittels des ersten Qualitätsregelkreises (Q1) bestimmten Achsbewegungen aus unkorrigierten Achsbewegungen bestimmt werden, indem den unkorrigierten Achsbewegungen Korrekturen (30) zugeordnet werden, wobei die Korrekturen (30) in dem Schritt Korrigieren (28) des ersten Qualitätsregelkreises (Q1) anhand von in dem Schritt Messen (20) des ersten Qualitätsregelkreises (Q1) ermittelten Abweichungen mindestens einer geschliffenen Verzahnung (23) von der vor-finalen Sollgeometrie (12) berechnet werden
und/oder
- die mittels des ersten Qualitätsregelkreises (Q1) bestimmte Geometrie des Schleifwerkzeugs (17) aus einer unkorrigierten Geometrie des Schleifwerkzeugs (6) bestimmt wird, indem der unkorrigierten Geometrie des Schleifwerkzeugs (6) Korrekturen (30) zugeordnet werden, wobei die Korrekturen (30) in dem Schritt Korrigieren (28) des ersten Qualitätsregelkreises (Q1) anhand von in dem Schritt Messen (20) des ersten Qualitätsregelkreises (Q1) ermittelten Abweichungen mindestens einer geschliffenen Verzahnung (23) von der vor-finalen Sollgeometrie (12) berechnet werden.

3. Verfahren nach einem der voranstehenden Ansprüche,
**dadurch gekennzeichnet, dass**
- die mittels des zweiten Qualitätsregelkreises (Q2) bestimmten Achsbewegungen aus unkorrigierten Achsbewegungen bestimmt werden, indem den unkorrigierten Achsbewegungen Korrekturen zugeordnet werden, wobei die Korrekturen in dem Schritt Korrigieren des zweiten Qualitätsregelkreises (Q2) anhand von in dem Schritt Messen (20) des zweiten Qualitätsregelkreises (Q2) ermittelten Abweichungen mindestens einer geschliffenen Verzahnung (23) von der finalen Sollgeometrie (8) berechnet werden
und/oder
- die mittels des zweiten Qualitätsregelkreises (Q2) bestimmte Geometrie des Schleifwerkzeugs aus einer unkorrigierten Geometrie des Schleifwerkzeugs bestimmt wird, indem der unkorrigierten Geometrie des Schleifwerkzeugs Korrekturen zugeordnet werden, wobei die Korrekturen in dem Schritt Korrigieren (28) des zweiten Qualitätsregelkreises (Q2) anhand von in dem Schritt Messen (20) des zweiten Qualitätsregelkreises (Q2) ermittelten Abweichungen mindestens einer geschliffenen Verzahnung (23) von der finalen Sollgeometrie (8) berechnet werden.

4. Verfahren nach Anspruch 1 oder Anspruch 2,
**dadurch gekennzeichnet, dass**
die Achsbewegungen und/oder die Geometrie des Schleifwerkzeugs, die mittels des ersten Qualitätsregelkreises (Q1) bestimmt worden sind, als Eingangsgrößen für den zweiten Qualitätsregelkreis (Q2) verwendet werden, so dass ein erstes Schleifen des zweiten Qualitätsregelkreises (Q2) zunächst mit den Achsbewegungen und/oder der Geometrie des Schleifwerkzeugs, die mittels des erstes Qualitätsregelkreises (Q1) bestimmt worden sind, durchgeführt wird und diese Achsbewegungen und/oder diese Geometrie des Schleifwerkzeugs durch Wiederholen der Schritte Schleifen (18), Messen (20) und Korrigieren (28) des zweiten Qualitätsregelkreises (Q2) für die finale Sollgeometrie (8) der Verzahnung (4) angepasst werden, um die Achsbewegungen und/oder die Geometrie des Schleifwerkzeugs des zweiten Qualitätsregelkreises (Q2) zu bestimmen.

5. Verfahren nach Anspruch 2 und Anspruch 4,
**dadurch gekennzeichnet, dass**
- die mittels des zweiten Qualitätsregelkreises (Q2) bestimmten Achsbewegungen aus den Achsbewegungen des ersten Qualitätsregelkreises (Q1) bestimmt werden, indem den Achsbewegungen oder Korrekturen (30) des ersten Qualitätsregelkreises (Q1) weitere Korrekturen (32) zugeordnet werden, wobei die weiteren Korrekturen (32) in dem Schritt Korrigieren (28) des zweiten Qualitätsregelkreises (Q1) anhand von in dem Schritt Messen (20) des zweiten Qualitätsregelkreises (Q1) ermittelten Abweichungen mindestens einer geschliffenen Verzahnung (23) von der finalen Sollgeometrie (8) berechnet werden
und/oder
- die mittels des zweiten Qualitätsregelkreises (Q1) bestimmte Geometrie des Schleifwerkzeugs aus der Geometrie des Schleifwerkzeugs des ersten Qualitätsregelkreises (Q1) bestimmt wird, indem der Geometrie des Schleifwerkzeugs oder Korrekturen (30) des ersten Qualitätsregelkreises (Q1) weitere Korrekturen (32) zugeordnet werden, wobei die weiteren Korrekturen (32) in dem Schritt Korrigieren (28) des zweiten Qualitätsregelkreises (Q2) anhand von in dem Schritt Messen (20) des zweiten Qualitätsregelkreises (Q2) ermittelten Abweichungen mindestens einer geschliffenen Verzahnung (23) von der finalen Sollgeometrie (8) berechnet werden.

6. Verfahren nach einem der voranstehenden Ansprüche,
**dadurch gekennzeichnet, dass**
weitere Qualitätsregelkreise für weitere Schleifhübe vorgesehen sind oder
jedem Schleifhub ein jeweiliger Qualitätsregelkreis zugeordnet ist.

7. Verfahren nach einem der voranstehenden Ansprüche,
**dadurch gekennzeichnet, dass**
mindestens ein Qualitätsregelkreis (Q1, Q2) ein Anpassen der Werkzeuggeometrie durch Abrichten aufweist.

8. Verfahren, mit den Verfahrensschritten:
- Schleifen einer Verzahnung (23), wobei ein Schleifhub oder mehrere Schleifhübe durchgeführt werden, wobei Achsbewegungen und/oder eine Geometrie eines Schleifwerkzeugs (17) verwendet werden, die mittels des ersten Qualitätsregelkreises (Q1) gemäß einem der voranstehenden Ansprüche bestimmt worden sind;
- Weiteres Schleifen der Verzahnung (23), wobei ein Schleifhub oder mehrere Schleifhübe durchgeführt werden, wobei Achsbewegungen und/oder eine Geometrie des Schleifwerkzeugs (17) verwendet wird, die mittels des zweiten Qualitätsregelkreises (Q2) gemäß einem der voranstehenden Ansprüche bestimmt worden sind.

9. Verfahren gemäß Anspruch 8 und gemäß einem der Ansprüche 2 - 5,
dass Korrekturen (30) des ersten Qualitätsregelkreises (Q1) und/oder Korrekturen (32) des zweiten Qualitätsregelkreises (Q2) angepasst werden, in dem die jeweiligen Schritte Schleifen (18), Messen (20) und Korrigieren (28) für die geschliffene Verzahnung (23) und/oder weitere geschliffene Verzahnungen (23) durchgeführt werden.

10. Verfahren nach einem der voranstehenden Ansprüche,
**dadurch gekennzeichnet, dass**
das Schleifen ein kontinuierliches Wälzschleifen mittels einer Schleifschnecke (17) ist, insbesondere mittels einer abrichtbaren Schleifschnecke (17) ist.

11. Verfahren nach Anspruch 10,
**dadurch gekennzeichnet, dass**
der erste Qualitätsregelkreis (Q1) und/oder der zweite Qualitätsregelkreis (Q2) ein Bestimmen von Achsbewegungen für ein Abrichten der Schleifschnecke (17) aufweisen.

12. Verfahren nach Anspruch 10 oder Anspruch 11,
**dadurch gekennzeichnet,**
**dass** die Schleifschnecke (17) einen ersten Abschnitt (L1) aufweist, der eine Geometrie des Schleifwerkzeugs gemäß dem ersten Qualitätsregelkreis (Q1) hat, und dass die Schleifschnecke (17) einen zweiten Abschnitt (L2) aufweist, der eine Geometrie des Schleifwerkzeugs (17) gemäß dem zweiten Qualitätsregelkreis (Q1) hat.
